# EUROPÄISCHE PATENTSCHRIFT

(11) **EP 2 423 551 B1**
(45) Veröffentlichungstag und Bekanntmachung des Hinweises auf die Patenterteilung: **25.01.2017**
(21) Anmeldenummer: 10173724.5
(22) Anmeldetag: 23.08.2010
(51) Int. Cl.: F16L 11/15, E03F 3/04

(54) **Verbundwellrohr**
Compound corrugated pipe
Tuyau ondulé composite

(43) Veröffentlichungstag der Anmeldung: 29.02.2012
(73) Patentinhaber: FRÄNKISCHE ROHRWERKE, GEBR. KIRCHNER GmbH & Co., D-97486 Königsberg (DE)
(72) Erfinder: Kirchner, Otto, 97486 Königsberg (DE)
(74) Vertreter: Weickmann & Weickmann PartmbB

(56) Entgegenhaltungen:
- EP-A1- 2 146 125
- EP-A2- 1 748 243
- WO-A1-02/081957
- US-A1- 2007 256 751

## Beschreibung

Die Erfindung betrifft ein Verbundwellrohr, umfassend ein Innenrohr und ein mit diesem verbundenes gewelltes Außenrohr, wobei das Wellungsprofil des Außenrohrs umfasst:
einen äußeren, im Wesentlichen zylindrischen Abschnitt,
einen inneren, im Wesentlichen zylindrischen Abschnitt, dessen mittlerer Durchmesser kleiner ist als der mittlere Durchmesser des äußeren, im Wesentlichen zylindrischen Abschnitts,
zwischen dem äußeren, im Wesentlichen zylindrischen Abschnitt und zwei benachbarten inneren, im Wesentlichen zylindrischen Abschnitten angeordnete Flankenabschnitte,
gekrümmte äußere Übergangsabschnitte, welche den äußeren, im Wesentlichen zylindrischen Abschnitt mit den Flankenabschnitten verbinden, und
innere Übergangsabschnitte, welche die Flankenabschnitte mit zwei benachbarten inneren, im Wesentlichen zylindrischen Abschnitten verbinden.

Dabei bilden die äußeren, im Wesentlichen zylindrischen Abschnitte, die äußeren Übergangsabschnitte und die Flankenabschnitte zusammen die Wellenberge des Wellungsprofils, während die inneren, im Wesentlichen zylindrischen Abschnitte die Talsohle der zwischen diesen Wellenbergen angeordneten Wellentäler des Wellungsprofils bilden und der Verbindung von Außenrohr und Innenrohr dienen.

Derartige Wellrohre werden beispielsweise als Abwasserrohre in Abwasserkanalsystemen verwendet. Sie müssen daher zuverlässig den Anforderungen genügen, die dieses Einsatzgebiet an sie stellt: Zum einen müssen sie über eine ausreichend hohe Steifigkeit verfügen, damit ihr Querschnitt unter der Last des Erdreichs nicht allzu sehr zusammengedrückt wird. Der Wert der Steifigkeit wird dabei aus der Kraft bestimmt, mit welcher das Wellrohr zusammengedrückt werden muss, um eine Durchmesserveränderung von 3% zu erzielen. Ferner müssen sie einer Durchmesserveränderung von mindestens 30% widerstehen können ohne einzuknicken, damit ihre Dichtigkeit auch unter extremer Belastung sichergestellt ist.

Die EP-A-1 143 183 offenbart ein gattungsgemäßes Verbundwellrohr. Das Wellungsprofil dieses Verbundwellrohrs weist die allgemein bekannte Trapezform auf, deren Vorteil es ist, dass sie aufgrund des großen Flächenträgheitsmoments über eine hohe Steifigkeit verfügt. Die Forderung nach einer Widerstandsfähigkeit gegenüber Durchmesserveränderungen von mindestens 30% kann das aus der EP-A-1 143 183 bekannte Wellrohr aber nur mit hohem Materialeinsatz erfüllen, was hohe Herstellungskosten nach sich zieht. Ein gattungsgemäßes Verbundwellrohr ist auch aus der EP-A-1 748 243 bekannt.

Aus der EP-A-1 847 752 ist ein Verbundwellrohr bekannt, welches die sich aus der EP-A-1 143 183 ergebende Problematik zu lösen versucht. Dieses Verbundwellrohr ist im Bereich der Spitze der Wellenberge gewölbt ausgebildet, wobei der Krümmungsradius der Wölbung in etwa der Höhe des Wellungsprofils entspricht. Um eine vergleichbare Steifigkeit bereitstellen zu können, muss das Wellungsprofil jedoch relativ hoch ausgebildet sein, was bezogen auf den Außendurchmesser des Wellrohrs zu einer relativ kleinen nutzbaren Querschnittsfläche des Lumens des Innenrohrs des Verbundwellrohrs führt.

Demgegenüber ist es Aufgabe der Erfindung, Verbundwellrohre der eingangs genannten Art bereitzustellen, welche verglichen mit den aus dem Stand der Technik bekannten Verbundwellrohren sowohl über eine hohe Steifigkeit als auch über eine hohe Widerstandsfähigkeit gegenüber extremer radialer Verformung verfügen, und das bei bezogen auf den Außendurchmesser des Wellrohrs hoher nutzbarer Querschnittsfläche des Lumens des Innenrohrs.

Diese Aufgabe wird erfindungsgemäß durch ein Verbundwellrohr der eingangs genannten Art gelöst, bei welchem der Wert des Verhältnisses zwischen der Länge des äußeren, im Wesentlichen zylindrischen Abschnitts und dem Krümmungsradius der äußeren Übergangsabschnitte zwischen etwa 0,1 und etwa 1,0 beträgt, bevorzugt zwischen etwa 1/3 und etwa 2/3 beträgt. Die Beachtung dieser Bemessungsregel stellt zum einen sicher, dass im Hinblick auf die Erzielung eines hohen Flächenträgheitsmoments ein ausreichend lang bemessener äußerer, im Wesentlichen zylindrischer Abschnitt vorhanden ist. Zum anderen stellt sie aber auch sicher, dass von außen auf das Wellungsprofil einwirkende Kräfte von dem äußeren, im Wesentlichen zylindrischen Abschnitt mit einem günstigen Kraftlinienverlauf in die Flankenabschnitte eingeleitet werden können.

An dieser Stelle sei darauf hingewiesen, dass im Zusammenhang mit der vorliegenden Erfindung unter dem Krümmungsradius der äußeren Übergangsabschnitte der Krümmungsradius der Außenfläche der äußeren Übergangsabschnitte verstanden wird.

Im Hinblick auf die Erzielung einer hohen Flexibilität des Wellrohrs gegenüber Verformung, auch extremer Verformung, in radialer Richtung ist es ferner vorteilhaft, wenn der Wert des Verhältnisses zwischen der Höhe des Wellungsprofils des Außenrohrs und dem Krümmungsradius der äußeren Übergangsabschnitte zwischen etwa 1,6 und etwa 2,7 beträgt, wobei unter der Höhe des Wellungsprofils des Außenrohrs die Differenz zwischen dem mittleren Durchmesser der Außenfläche des äußeren, im Wesentlichen zylindrischen Abschnitts und der Außenfläche des Innenrohrs verstanden wird. Es hat sich gezeigt, dass bei Auswahl des Werts des Krümmungsradius aus diesem Wertebereich von außen auf das Wellungsprofil einwirkende Kräfte besonders günstig in die Flankenabschnitte eingeleitet werden können.

Vorteilhaft ist es ferner, wenn sich das Material von dem äußeren, im Wesentlichen zylindrischen Abschnitt zu den beiden äußeren Übergangsabschnitten mit im Wesentlichen konstanter Wandungsdicke fortsetzt. Auch diese Maßnahme kann dadurch unterstützt werden, dass man den Wert des Krümmungsradius aus dem vorstehend genannten Wertebereich des Verhältnisses zwischen der Höhe des Wellungsprofils des Außenrohrs und dem Krümmungsradius der äußeren Übergangsabschnitte auswählt. In diesem Fall kann sich das das Wellungsprofil bildende Material bei der Ausformung des Wellungsprofils in den Formbacken der Fertigungsanlage gleichmäßig an die Wandungen der Formbacken anlegen, so dass es weder zur Ausbildung von Stauchungsstellen noch zur Ausbildung von Knicken kommt.

Zu den unteren Übergangsabschnitten hin kann sich die Wandungsstärke dann erhöhen, was für ein stabiles Fundament sorgt, auf dem der Wellenberg des Wellungsprofils ruht. Auch dies unterstützt einen vorteilhaften Kraftlinienverlauf.

In Weiterbildung der Erfindung wird ferner vorgeschlagen, dass der Wert des Verhältnisses zwischen der Profilteilung und dem Krümmungsradius der äußeren Übergangsabschnitte zwischen etwa 3,1 und etwa 3,8 beträgt. Unter der Profilteilung wird dabei üblicherweise die Länge der Periode verstanden, mit der die Wellenberge aufeinander folgen.

Ferner ist es vorteilhaft, wenn der Wert des Verhältnisses zwischen der Profilteilung und der Höhe des Wellungsprofils des Außenrohrs zwischen etwa 1,5 und etwa 4,0, vorzugsweise zwischen etwa 1,5 und etwa 2,0, beträgt. Größere Verhältnisse führen erfahrungsgemäß zu einer zu geringen Flexibilität des Wellrohrs, sind jedoch für spezielle Anwendung nicht vollständig auszuschließen. Beträgt der Wert des Verhältnisses weniger als 1,5, so führt dies zu einem erhöhten Materialbedarf, was ebenfalls nachteilig ist.

Üblicherweise nimmt die Höhe des Wellrohrs mit dem Durchmesser des Wellrohrs zu, und zwar je nach Anforderung an die Steifigkeit des Wellrohrs.

Insbesondere zur Erzielung von Wellrohren, die den Anforderungen der Steifigkeitsklasse SN 8KN/m² genügen, ist es dabei von Vorteil, wenn der Wert des Verhältnisses zwischen der Höhe des Wellungsprofils des Außenrohrs und dem Innendurchmesser des Innenrohrs zwischen etwa 0,04 und etwa 0,10 beträgt, vorzugsweise zwischen etwa 0,06 und etwa 0,08.

In Weiterbildung der Erfindung wird vorgeschlagen, dass der Winkel, den die Flankenabschnitte mit einer zur Achse des Wellrohrs orthogonal verlaufenden Ebene einschließen, höchstens 15°, vorzugsweise zwischen etwa 5° und etwa 10°, beträgt. Auch diese Bemessungsregel hat sich im Hinblick auf die Erzielung eines günstigen Kraftlinienverlauf als vorteilhaft erwiesen.

Im Hinblick auf die Herstellungskosten besteht eine Grundforderung darin, die Dicken der Wandung des Außenrohrs möglichst gering zu halten. Die Dicke der Wandung des Außenrohres hängt dabei hauptsächlich vom Verwendungszweck des Wellrohrs ab. Es ist leicht einzusehen, dass zur Erzielung einer höheren Steifigkeitsklasse bei ansonstens gleichen Abmessungen des Wellrohrs, d.h. insbesondere bei Verwendung der gleichen Formbacken in der Fertigungsanlage, eine größere Dicke der Wandung des Außenrohrs erforderlich ist. Die Dicke der Wandung des Innenrohrs wird für den jeweiligen Rohrdurchmesser durch eine europäische Norm EN 13476-3 vorgegeben.

Zur Erzielung eines niedrigen Strömungswiderstands im Lumen des Innenrohrs ist es vorteilhaft, wenn das Innenrohr im Wesentlichen glattwandig ausgebildet ist. Es ist jedoch grundsätzlich auch möglich, dass das Innenrohr ebenfalls eine leichte Wellung aufweist. Es sei darauf hingeweisen, dass sich selbst dann, wenn an sich die Herstellung des Wellrohrs mit einem vollständig glattwandigen Innenrohr gewünscht ist, fertigungsbedingt eine leichte Wellung ergeben kann.

Ergänzend sei an dieser Stelle erwähnt, dass auch der äußere, im Wesentlichen zylindrische Abschnitt fertigungsbedingt eine geringe Ausbauchung aufweisen kann. Der Krümmungsradius dieser Ausbauchung wird jedoch üblicherweise ein Vielfaches der Höhe des Wellungsprofils betragen. Bevorzugt ist er unendlich groß, so dass der äußere, im Wesentlichen zylindrische Abschnitt eine präzise Zylinderform aufweist.

Anzumerken ist ferner, dass das Innenrohr oder/und das Außenrohr aus Kunststoff, vorzugsweise thermoplastischem Kunststoff, noch bevorzugter Polyolefinmaterial, beispielsweise Polyethylen- oder Polypropylen-Material, gebildet sein kann bzw. können. Vorzugsweise sind sowohl das Innenrohr als auch das Außenrohr aus dem gleichen Grundkunststoff gebildet, wobei die Eigenschaften dieses Grundkunststoffs durch Auswahl der jeweils zugegebenen Zuschlagsstoffe im Hinblick auf die jeweiligen Anforderungen an das Innenrohr bzw. das Außenrohr gezielt beeinflusst werden können.

Nachzutragen ist noch, dass die erfindungsgemäßen Wellrohre auch als Kabelschutzrohre eingesetzt werden können.

Unter Berücksichtigung auch des letztgenannten Anwendungsgebiets kann der Außendurchmesser des Außenrohrs beispielsweise zwischen etwa 20 mm und etwa 1200 mm betragen.

Nachzutragen ist ferner, dass der Krümmungsradius der inneren Übergangsabschnitte vorteilhafterweise kleiner als der Krümmungsradius der äußeren Übergangsabschnitte sein kann, vorzugsweise kleiner als 1/3 des Krümmungsradius der äußeren Übergangsabschnitte.

Die Erfindung wird im Folgenden an einem Ausführungsbeispiel anhand der beigefügten Zeichnung näher erläutert werden. Es stellt dar:
- Figur 1: einen schematischen Längsschnitt eines erfindungsgemäßen Verbundwellrohrs; und
- Figur 2: eine vergrößerte Darstellung zur Erläuterung der Eigenschaften des Wellungsprofils des Wellrohrs aus Figur 1.

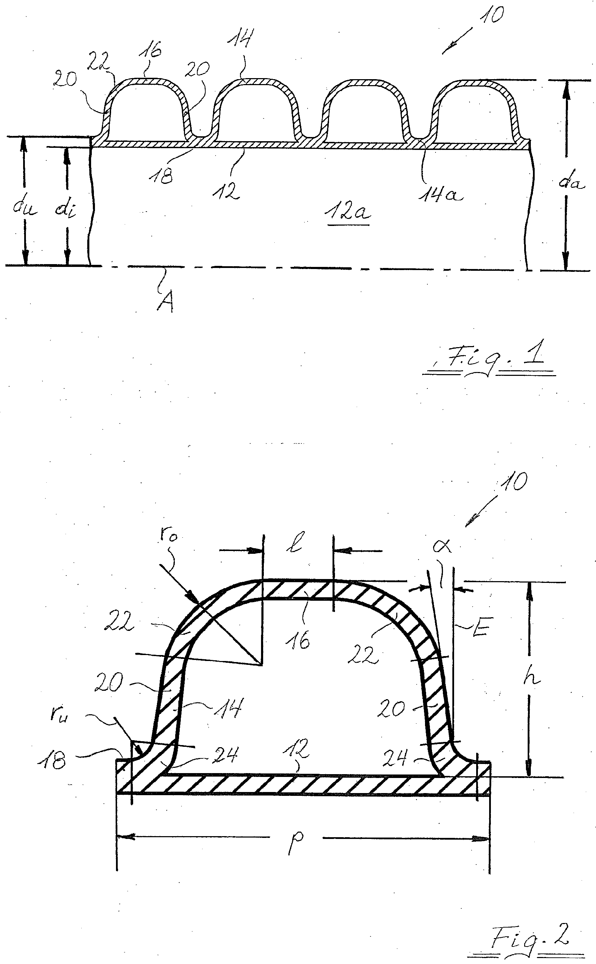

In Figur 1 ist ein erfindungsgemäßes Wellrohr ganz allgmein mit 10 bezeichnet. Es umfasst ein im Wesentlichen glattwandig ausgebildetes Innenrohr 12 und ein gewelltes Außenrohr 14. Der Innendurchmesser des Lumens 12a des Innenrohrs 12 ist in Figur 1 mit dᵢ bezeichnet, der Außendurchmesser des Außenrohrs 14 mit dₐ. Das Außenrohr 14 ist im Bereich seiner Wellentäler 14a mit dem Innenrohr 12 verbunden.

Wie man insbesondere Figur 2 entnimmt, umfasst das Wellungsprofil
- einen äußeren, im Wesentlichen zylindrischen Abschnitt 16,
- einen inneren, im Wesentlichen zylindrischen Abschnitt 18, dessen mittlerer Durchmesser dᵤ kleiner ist als der mittlere Durchmesser dₐ des äußeren, im Wesentlichen zylindrischen Abschnitts 16,
- zwischen dem äußeren, im Wesentlichen zylindrischen Abschnitt 16 und zwei benachbarten inneren, im Wesentlichen zylindrischen Abschnitten 18 angeordnete Flankenabschnitte 20,
- gekrümmte äußere Übergangsabschnitte 22, welche den äußeren, im Wesentlichen zylindrischen Abschnitt 16 mit den Flankenabschnitten 20 verbinden, und
- innere Übergangsabschnitte 24, welche die Flankenabschnitte 20 mit zwei benachbarten inneren, im Wesentlichen zylindrischen Abschnitten 18 verbinden.

Die Länge des äußeren, im Wesentlichen zylindrischen Abschnitts 16 ist in Figur 2 mit I bezeichnet. Der Krümmungsradius der äußeren Oberfläche der äußeren Übergangsabschnitte 22 ist in Figur 2 mit rₒ bezeichnet. Der Krümmungsradius der äußeren Oberfläche der inneren Übergangsabschnitte 24 ist in Figur 2 mit rᵤ bezeichnet. Die Profilteilung oder Periodenlänge des Wellungsprofils ist in Figur 2 mit p bezeichnet. Die zwischen der äußeren Oberfläche des Innenrohrs 12 und der äußeren Oberfläche des äußeren, im Wesentlichen zylindrischen Abschnitts 16 ist in Figur 2 mit h bezeichnet. Und der Winkel, den die äußere Oberfläche der Flankenabschnitte 20 mit einer orthogonal zu Rohrachse A verlaufenden Ebene E einschließt, ist in Figur 2 mit α bezeichnet.

Für die Abmessungen dieser Parameter gelten die vorstehend erläuterten Bemessungsregeln.

## Patentansprüche

1. Verbundwellrohr (10), umfassend ein Innenrohr (12) und ein mit diesem verbundenes gewelltes Außenrohr (14), wobei das Wellungsprofil des Außenrohrs (14) umfasst:
einen äußeren, im Wesentlichen zylindrischen Abschnitt (16),
einen inneren, im Wesentlichen zylindrischen Abschnitt (18), dessen mittlerer Durchmesser (dᵤ) kleiner ist als der mittlere Durchmesser (dₐ) des äußeren, im Wesentlichen zylindrischen Abschnitts (16),
zwischen dem äußeren, im Wesentlichen zylindrischen Abschnitt (16) und zwei benachbarten inneren, im Wesentlichen zylindrischen Abschnitten (18) angeordnete Flankenabschnitte (20),
gekrümmte äußere Übergangsabschnitte (22), welche den äußeren, im Wesentlichen zylindrischen Abschnitt (16) mit den Flankenabschnitten (20) verbinden, und
innere Übergangsabschnitte (24), welche die Flankenabschnitte (20) mit zwei benachbarten inneren, im Wesentlichen zylindrischen Abschnitten (18) verbinden,
**dadurch gekennzeichnet, dass** der Wert des Verhältnisses zwischen der Länge (I) des äußeren, im Wesentlichen zylindrischen Abschnitts (16) und dem Krümmungsradius (rₒ) der äußeren Übergangsabschnitte (22) zwischen etwa 0,1 und etwa 1,0 beträgt.

2. Wellrohr nach Anspruch 1,
**dadurch gekennzeichnet, dass** der Wert des Verhältnisses zwischen der Länge (I) des äußeren, im Wesentlichen zylindrischen Abschnitts (16) und dem Krümmungsradius (rₒ) der äußeren Übergangsabschnitte (22) zwischen etwa 1/3 und etwa 2/3 beträgt.

3. Wellrohr nach Anspruch 1 oder 2,
**dadurch gekennzeichnet, dass** der Wert des Verhältnisses zwischen der Höhe (h) des Wellungsprofils des Außenrohrs (14) und dem Krümmungsradius (rₒ) der äußeren Übergangsabschnitte (22) zwischen etwa 1,6 und etwa 2,7 beträgt.

4. Wellrohr nach einem der Ansprüche 1 bis 3,
**dadurch gekennzeichnet, dass** sich das Material von dem äußeren, im Wesentlichen zylindrischen Abschnitt (16) zu den beiden äußeren Übergangsabschnitten (22) mit im Wesentlichen konstanter Wandungsdicke fortsetzt.

5. Wellrohr nach einem der Ansprüche 1 bis 4,
**dadurch gekennzeichnet, dass** der Wert des Verhältnisses zwischen der Profilteilung (p) und dem Krümmungsradius (rₒ) der äußeren Übergangsabschnitte (22) zwischen etwa 3,1 und etwa 3,8 beträgt.

6. Wellrohr nach einem der Ansprüche 1 bis 5,
**dadurch gekennzeichnet, dass** der Wert des Verhältnisses zwischen der Profilteilung (p) und der Höhe (h) des Wellungsprofils des Außenrohrs (14) zwischen etwa 1,5 und etwa 4,0 beträgt, vorzugsweise zwischen etwa 1,6 und etwa 2,1 beträgt.

7. Wellrohr nach einem der Ansprüche 1 bis 6,
**dadurch gekennzeichnet, dass** der Wert des Verhältnisses zwischen der Höhe (h) des Wellungsprofils des Außenrohrs (14) und dem Innendurchmesser (dᵢ) des Innenrohrs (12) zwischen etwa 0,04 und etwa 0,10, vorzugsweise zwischen etwa 0,06 und etwa 0,08, beträgt.

8. Wellrohr nach einem der Ansprüche 1 bis 7,
**dadurch gekennzeichnet, dass** der Winkel (α), den die Flankenabschnitte (20) mit einer zur Achse (A) des Wellrohrs (10) orthogonal verlaufenden Ebene (E) einschließen, höchstens 15°, vorzugsweise zwischen etwa 5° und etwa 10°, beträgt.

9. Wellrohr nach einem der Ansprüche 1 bis 8,
**dadurch gekennzeichnet, dass** das Innenrohr (12) im Wesentlichen glattwandig ausgebildet ist.

10. Wellrohr nach einem der Ansprüche 1 bis 9,
**dadurch gekennzeichnet, dass** das Innenrohr (12) oder/und das Außenrohr (14) aus Kunststoff, vorzugsweise thermoplastischem Kunststoff, noch bevorzugter Polyolefin-Material, beispielsweise Polyethylen- oder Polypropylen-Material, gebildet ist.

11. Wellrohr nach einem der Ansprüche 1 bis 10,
**dadurch gekennzeichnet, dass** der Außendurchmesser (dₐ) des Außenrohrs (12) zwischen etwa 20 mm und etwa 1200 mm beträgt.

## Claims

1. Compound corrugated pipe (10) comprising an inner pipe (12) and a corrugated outer pipe (14) connected therewith, wherein the corrugation profile of the outer pipe (14) comprises:
an outer substantially cylindrical portion (16),
an inner substantially cylindrical portion (18) having a median diameter (dᵤ) being smaller than the median diameter (dₐ) of the outer substantially cylindrical portion (16),
flank portions (20) arranged between the outer substantially cylindrical portion (16) and two adjacent inner substantially cylindrical portions (18),
curved outer transition portions (22) connecting the outer substantially cylindrical portion (16) to the flank portions (20), and
inner transition portions (24) connecting the flank portions (20) to two adjacent inner substantially cylindrical portions (18),
**characeterized** in that the value of the ratio between the length (I) of the outer substantially cylindrical portion (16) and the radius of curvature (rₒ) of the outer transition portions (22) is between approximately 0.1 and approximately 1.0.

2. Corrugated pipe according to claim 1,
**characeterized** in that the value of the ratio between the length (l) of the outer substantially cylindrical portion (16) and the radius of curvature (rₒ) of the outer transition portions (22) is between approximately 1/3 and approximately 2/3.

3. Corrugated pipe according to claim 1 or 2,
**characeterized** in that the value of the ratio between the height (h) of the corrugation profile of the outer pipe (14) and the radius of curvature (rₒ) of the outer transition portions (22) is between approximately 1.6 and approximately 2.7.

4. Corrugated pipe according to any of claims 1 to 3,
**characeterized** in that the material continues with a substantially constant wall thickness from the outer substantially cylindrical portion (16) to the two outer transition portions (22).

5. Corrugated pipe according to any of claims 1 to 4,
**characeterized** in that the value of the ratio between the profile pitch (p) and the radius of curvature (rₒ) of the outer transition portions (22) is between approximately 3.1 and approximately 3.8.

6. Corrugated pipe according to any of claims 1 to 5,
characeterized in that the value of the ratio between the profile pitch (p) and the height (h) of the corrugation profile of the outer pipe (14) is between approximately 1.5 and approximately 4.0, preferably between approximately 1.6 and approximately 2.1.

7. Corrugated pipe according to any of claims 1 to 6,
**characeterized** in that the value of the ratio between the height (h) of the corrugation profile of the outer pipe (14) and the inner diameter (dᵢ) of the inner pipe (12) is between approximately 0.04 and approximately 0.10, preferably between approximately 0.06 and approximately 0.08.

8. Corrugated pipe according to any of claims 1 to 7,
**characeterized** in that the angle (α) formed by the flank portions (20) with a plane (E) orthogonal to an axis (A) of the corrugated pipe (10) therebetween is not greater than 15°, preferably between approximately 5° and approximately 10°.

9. Corrugated pipe according to any of claims 1 to 8,
**characeterized** in that the inner pipe (12) is formed substantially smooth-walled.

10. Corrugated pipe according to any of claims 1 to 9,
**characeterized** in that the inner pipe (12) or/and the outer pipe (14) are made of a synthetic material, preferably of a thermoplastic material, more preferably of a polyolefin material such as a polyethylene or a polypropylene material.

11. Corrugated pipe according to any of claims 1 to 10,
**characeterized** in that the outer diameter (dₐ) of the outer pipe (12) is between approximately 20 mm and approximately 1200 mm.

## Revendications

1. Tuyau ondulé composite (10), comprenant un tuyau intérieur (12) et un tuyau extérieur (14) ondulé relié au tuyau intérieur, dans lequel le profil à ondulation du tuyau extérieur (14) comprend :
un segment (16) extérieur sensiblement cylindrique,
un segment (18) intérieur sensiblement cylindrique, dont le diamètre (dᵤ) moyen est plus petit que le diamètre (dₐ) moyen du segment (16) extérieur sensiblement cylindrique,
des segments de flanc (20) disposés entre le segment (16) extérieur sensiblement cylindrique et deux segments (18) intérieurs adjacents sensiblement cylindriques,
des segments de transition (22) extérieurs courbés, qui relient le segment (16) extérieur sensiblement cylindrique aux segments de flanc (20), et
des segments de transition (24) intérieurs, qui relient les segments de flanc (20) aux deux segments (18) intérieurs adjacents sensiblement cylindriques,
**caractérisé en ce que** la valeur du rapport entre la longueur (1) du segment (16) extérieur sensiblement cylindrique et le rayon de courbure (rₒ) des segments de transition (22) extérieurs est comprise entre environ 0,1 et environ 1,0.

2. Tuyau ondulé selon la revendication 1,
**caractérisé en ce que** la valeur du rapport entre la longueur (1) du segment (16) extérieur sensiblement cylindrique et le rayon de courbure (rₒ) des segments de transition (22) extérieurs est comprise entre environ 1/3 et environ 2/3.

3. Tuyau ondulé selon la revendication 1 ou 2,
**caractérisé en ce que** la valeur du rapport entre la hauteur (h) du profil à ondulation du tuyau extérieur (14) et le rayon de courbure (rₒ) des segments de transition (22) extérieurs est comprise entre environ 1,6 et environ 2,7.

4. Tuyau ondulé selon l'une quelconque des revendications 1 à 3,
**caractérisé en ce que** le matériau présente en continu une épaisseur de paroi sensiblement constante depuis le segment (16) extérieur sensiblement cylindrique vers les deux segments de transition (22) extérieurs.

5. Tuyau ondulé selon l'une quelconque des revendications 1 à 4,
**caractérisé en ce que** la valeur du rapport entre le partage de profil (p) et le rayon de courbure (rₒ) des segments de transition (22) extérieurs est comprise entre environ 3,1 et environ 3,8.

6. Tuyau ondulé selon l'une quelconque des revendications 1 à 5,
**caractérisé en ce que** la valeur du rapport entre le partage de profil (p) et la hauteur (h) du profil à ondulation du tuyau extérieur (14) est comprise entre environ 1,5 et environ 4,0, de préférence entre environ 1,6 et environ 2,1.

7. Tuyau ondulé selon l'une quelconque des revendications 1 à 6,
**caractérisé en ce que** la valeur du rapport entre la hauteur (h) du profil à ondulation du tuyau extérieur (14) et le diamètre intérieur (dᵢ) du tuyau intérieur (12) est comprise entre environ 0,04 et environ 0,10, de préférence entre environ 0,06 et environ 0,08.

8. Tuyau ondulé selon l'une quelconque des revendications 1 à 7,
**caractérisé en ce que** l'angle (α), que les segments de flanc (20) forment avec un plan (E) s'étendant de manière perpendiculaire par rapport à l'axe (A) du tuyau ondulé (10), est égal au maximum à 15°, de préférence est compris entre environ 5° et environ 10°.

9. Tuyau ondulé selon l'une quelconque des revendications 1 à 8,
**caractérisé en ce que** le tuyau intérieur (12) est réalisé sensiblement avec des parois lisses.

10. Tuyau ondulé selon l'une quelconque des revendications 1 à 9,
**caractérisé en ce que** le tuyau intérieur (12) et/ou le tuyau extérieur (14) est formé à partir d'une matière synthétique, de préférence à partir d'une matière synthétique thermoplastique, de manière plus préférée d'un matériau à base de polyoléfine, tel qu'un matériau à base de polyéthylène ou de polypropylène.

11. Tuyau ondulé selon l'une quelconque des revendications 1 à 10,
**caractérisé en ce que** le diamètre extérieur (dₐ) du tuyau extérieur (12) est compris entre environ 20 mm et environ 1 200 mm.
